# EUROPÄISCHE PATENTSCHRIFT

(11) **EP 2 651 836 B1**
(45) Veröffentlichungstag und Bekanntmachung des Hinweises auf die Patenterteilung: **12.09.2018**
(21) Anmeldenummer: 11793793.8
(22) Anmeldetag: 08.12.2011
(51) Int. Cl.: C03B 23/025, C03B 23/035

(54) **VERFAHREN UND VORRICHTUNG ZUM BIEGEN VON SCHEIBEN**
METHOD AND DEVICE FOR BENDING SHEETS
PROCÉDÉ ET DISPOSITIF POUR CINTRER DES VITRES

(30) Priorität: 13.12.2010 EP 10194712
(43) Veröffentlichungstag der Anmeldung: 23.10.2013
(73) Patentinhaber: Saint-Gobain Glass France, 92400 Courbevoie (FR)
(72) Erfinder: BALDUIN, Michael, 52477 Alsdorf (DE); DUNKMANN, Benno, B-4700 Eupen (BE); LE NY, Jean-Marie, B-4851 Gemmenich (BE)
(74) Vertreter: Gebauer, Dieter Edmund
(86) Internationale Anmeldenummer: PCT/EP2011/072169
(87) Internationale Veröffentlichungsnummer: WO 2012/080071

(56) Entgegenhaltungen:
- DE-B3- 10 314 266
- DE-B3-102005 001 513
- DE-C1- 4 337 559
- US-A1- 2008 134 722

## Beschreibung

Die Erfindung betrifft ein Verfahren und eine Vorrichtung zum Biegen von Scheiben, einen Ofen zum Biegen von Scheiben und die Verwendung des Ofens.

Die Entwicklung neuer Kraftfahrzeuge wird neben Aspekten zur Ausstattung auch in großen Maßen von Designelementen bestimmt. Die Bedeutung des Windschutzscheibendesigns nimmt dabei aufgrund der großen, gut sichtbaren Fläche immer mehr zu. In dieser Hinsicht spielt nicht nur das Aussehen der Windschutzscheibe eine Rolle, sondern auch Aspekte zum Energiesparen und zur Umweltverträglichkeit. Leistungsfähige Mikroprozessoren sowie CAD (Computer-Aided Design) gestützte Softwarepakete ermöglichen zudem eine weitergehende Anpassung und Optimierung des Luftwiderstandes der Frontscheibe. Moderne Windschutzscheiben in Kraftfahrzeugen weisen aus diesem Grund zunehmend komplexere Formen auf. Insbesondere Fahrzeuge mit sehr niedrigem Spritverbrauch, aber auch Sportwagen stellen hohe Anforderungen an die Geometrie der Scheibe und somit auch an die zur Umsetzung notwendigen Verfahren zum Biegen von Scheiben. Die Biegung einer Glasscheibe lässt sich beispielsweise durch eine Kombination von Schwerkraftbiegung und Pressbiegung realisieren. Eine oder mehrere Glasscheiben werden in einen Biegering eingelegt und erwärmt. In diesem Prozess wird die Glasscheibe entlang der durch den Biegering vorgegebenen Geometrie mithilfe der auf die erwärmte Glasscheibe wirkenden Schwerkraft gebogen. Anschließend wird das erwärmte Glas mit Hilfe von Unterdruck und eines geeigneten Rahmens in die entsprechende Form gebogen.

Komplexere Geometrien lassen sich in der Regel nicht mit einem einzigen Biegeprozess realisieren. Erschwerend kommt hinzu, dass separate oder nachfolgende Biegeverfahren sich nicht beliebig kombinieren lassen. Diese Faktoren schränken die Möglichkeiten, zur angestrebten Scheibengeometrie zu gelangen, deutlich ein.

EP 0 677 491 A2 offenbart ein Verfahren zum Biegen und Tempern von Glasscheiben. Die Glasscheiben werden bis auf ihre Erweichungstemperatur erwärmt, in einer Vorrichtung zwischen zwei komplementären Formen gepresst und anschließend in einen Transportring überführt. Die Scheiben werden anschließend im Transportring getempert und gekühlt.

EP 1 371 616 B1 offenbart eine Vorrichtung zum Biegen und Vorspannen von Glasscheiben. Die Vorrichtung umfasst unter anderem aufeinander folgende Formträger, Vorwärmsektionen zum Erhitzen von Glasscheiben auf Biegetemperatur, eine auf Schwerkraft basierende Vorbiegesektion, eine Biegesektion mit Pressform und eine Abkühlsektion.

EP 1 358 131 B1 offenbart ein Verfahren zum paarweisen Biegen von Glasscheiben. Das Glasscheibenpaar wird hierzu in horizontaler Lage auf einer Rahmenbiegeform durch Schwerkraftbiegen vorgebogen. Anschließend wird das vorgebogenne Glasscheibenpaar mit einer vollflächigen Biegeform nachgebogen.

US 2008/0134722 A1 offenbart ein Verfahren und eine Vorrichtung zum Biegen von übereinanderliegenden Scheiben. Die Scheiben werden über eine Saugform angehoben und über eine gegenüberliegende Form gepresst und entsprechend der Geometrie gebogen.

DE 10 2005 001 513 B3 offenbart eine Vorrichtung und Verfahren zum Biegen von Glasscheiben. Die Vorrichtung zum Biegen einer Glasscheibe umfasst neben einer Ladezone, eine Ofenstrecke, eine Übergabestation und eine Nachkühlstrecke.

DE 103 14 266 B3 offenbart ein Verfahren und Vorrichtung zum Biegen von Glasscheiben. Im Verfahren werden die Glasscheiben in horizontaler Lage auf einer Rahmenbiegeform durch Schwerkraftbiegen vorgebogen und anschließend mit Hilfe einer Endbiegeform nachgebogen.

Das deutsche Patent DE 102005001513 B3 zeigt eine Vorrichtung zum Biegen von Scheiben, bei der erwärmte Scheiben in einer Ofenstrecke mittels Schwerkraftbiegung auf einer Transportform T1 vorgebogen und anschließend durch Ansaugen an eine obere Form F1 fertig gebogen werden. In einer von der Ofenstrecke thermisch separierten, nicht-geheizten Nachkühlstrecke können die Scheiben auf einer Transportform T2, die an die Endform der fertig gebogenen Scheiben als Negativform angepasst ist, um eine weitere Verformung zu vermeiden, abkühlen.

Das deutsche Patent DE 103 14 266 B3 zeigt ein Verfahren, bei dem erwärmte Scheiben mittels Schwerkraftbiegung auf einer Vorbiegeform vorgebogen und anschließend auf einer Endbiebeform fertig gebogen werden. Erwähnt ist eine Übergabeform, an der durch Ansaugung eine weitere Biegung der Scheibe erfolgen kann.

Den Dokumenten DE 102005 01513 B3, US 2008/134722 A1 und DE 4337559 C1 kann jeweils entnommen werden, dass Scheiben durch Ansaugen an eine Übergabeform in die gewünschte Endform fertig gebogen werden.

Die Aufgabe der vorliegenden Erfindung liegt darin, ein Verfahren zum Biegen von Scheiben bereitzustellen, welches auch die Biegung komplexer Geometrien in möglichst wenigen Verfahrensschritten, schnell und bei minimalem Energieeinsatz ermöglicht.

Die Aufgabe der Erfindung wird durch ein Verfahren und Vorrichtung nach den Ansprüchen 1 und 10 gelöst. Vorteilhafte Ausgestaltungen ergeben sich aus den abhängigen Ansprüchen.

Das erfindungsgemäße Verfahren zum Biegen von Scheiben umfasst einen ersten Schritt, wobei mindestens eine Scheibe, bevorzugt eine erste Scheibe und eine zweite Scheibe, in einen Vorbiegering auf einen fahrbaren Biegeringhalter eingesetzt werden. Das Verfahren eignet sich sowohl für eine Scheibe als auch für das paarweise Biegen von Scheiben. Der Vorbiegering hat bevorzugt eine mittlere Randendbiegung von 5 % bis 50 %. Der fahrbare Biegeringhalter fährt anschließend in einen Ofen und die Scheiben werden im Vorbiegering über eine Heizvorrichtung mindestens auf die Erweichungstemperatur des Glases, bevorzugt 550 °C bis 800 °C erwärmt. Die Erweichungstemperatur richtet sich nach der Zusammensetzung des Glases. Die im Vorbiegering eingelegten Scheiben werden durch Einwirkung der Schwerkraft auf 5 % bis 50 % der lokalen Randendbiegung vorgebogen. Der Ausdruck "Randendbiegung" umfasst im Sinne der Erfindung die mittlere (End-)Biegung im endgültigen, fertigen Zustand von mindestens einem Teilstück des Scheibenrandes oder Biegeringrandes mit einer Ausdehnung oder Länge von mindestens 30 % des gesamten Biegering- oder Scheibenrandes. Die Scheiben werden im nächsten Schritt über eine Ansaugvorrichtung angehoben und über die im Vorbiegering erhaltene Biegung hinaus gebogen. Die Scheiben werden auf 102 % bis 130 % der Randendbiegung gebogen. Die Biegung erfolgt über ein in der Ansaugvorrichtung befindliches Gegenskelett. Das Gegenskelett weißt bevorzugt die Form eines Ringes mit einer abstehenden, gebogenen Kontaktfläche auf. Die Ansaugvorrichtung enthält neben dem Gegenskelett eine das Gegenskelett umgebende Abdeckung mit einem Luftleitblech. Das Luftleitbleich befindet sich benachbart zur angehobenen Scheibe und ist so gestaltet, dass die Scheibe während der Biegung an der Kontaktfläche des Gegenskeletts einen Abstand von 3 mm bis 50 mm zu dem Luftleitblech aufweist. Dieser Abstand ermöglicht ein kontinuierliches Ansaugen von Luft im Zwischenraum zwischen der Scheibe und dem Luftleitblech. Die angesaugte Luft erzeugt einen Unterdruck zur Fixierung der Scheibe an der Kontaktfläche. Entsprechend der Biegung (Krümmung) der Kontaktfläche werden die Scheiben durch den Saugvorgang gebogen. Der Kontaktbereich des Formteils, insbesondere die Kontaktfläche mit der Scheibe, ist bevorzugt mit einem flexiblen oder weichen Material ausgekleidet. Dieses Material umfasst bevorzugt feuerfeste Fasern aus Glas, Metall oder Keramik und verhindert Beschädigungen wie Kratzer auf den Scheiben. Eine Beschreibung der Funktionsweise und des Aufbaus der Ansaugvorrichtung zum Anheben der Scheibe findet sich auch in der US 2008/0134722 A1, [0036] und [0038] bis [0040] sowie Anspruch 1 a). Die Scheiben werden anschließend über die Ansaugvorrichtung in einen Endbiegering auf dem fahrbaren Biegeringhalter abgelegt. Der Endbiegering hat bevorzugt mindestens eine 30 % größere mittlere Randendbiegung als der Vorbiegering. Das Ablegen der Scheiben kann beispielsweise durch Aufheben des Saugdruckes über eine Druckabsenkung in der Ansaugvorrichtung erfolgen. Der Vorbiegering und der Endbiegering sind jeweils entsprechend der beabsichtigten Scheibengeometrie gebogen. Der Umfang und der Öffnungswinkel des Biegerings richten sich nach der Geometrie der zu biegenden Scheibe. Der Vorbiegering und der Endbiegering sind bevorzugt auf dem gleichen fahrbaren Biegeringhalter angeordnet und lassen sich beispielsweise durch das Entfernen eines Stiftes oder Halterung vom Vorbiegering in den Endbiegering umstellen. Der Ausdruck "umstellen" umfasst im Sinne der Erfindung sowohl die Änderung der Form (Geometrie) des Biegerings vom Vorbiegering zum Endbiegering, als auch ein Abstreifen des Vorbiegerings sowie "Freiwerden" eines unter dem Vorbiegering angeordneten Endbiegrings. In einem abschließenden Schritt werden die Scheiben durch Schwerkraft im Endbiegering auf Endbiegung gebogen.

Die Scheibe wird bevorzugt anschließend abgekühlt.

Die Scheibe wird bevorzugt auf eine Temperatur von 500 °C bis 750 °C, besonders bevorzugt 580 °C bis 650 °C erwärmt.

Die Ansaugvorrichtung baut bevorzugt einen Ansaugdruck von 1 kg/m² bis 100 kg/m² auf. Dieser Ansaugdruck ist ausreichend, um die Scheibe an der Ansaugvorrichtung sicher zu fixieren und über das Gegenskelett zu biegen.

Die Scheibe enthält bevorzugt Glas, besonders bevorzugt Flachglas (Floatglas), Quarzglas, Borosilikatglas und/oder Kalk-Natron-Glas.

Die Scheibe wird bevorzugt durch die Schwerkraft im Vorbiegering auf 10 % bis 30 % der gemittelten Endbiegung vorgebogen.

Die Scheibe wird bevorzugt über die Ansaugvorrichtung angehoben und auf 100 % bis 130 %, bevorzugt auf 105 % bis 120 % der gemittelten globalen Randendbiegung gebogen. Der Ausdruck "globale Randendbiegung" bezieht sich auf eine prozentual gleichmäßige Biegung der gesamten Scheibe. Die Scheibe wird bevorzugt an einen Biegering (Gegenskelett) in der Ansaugvorrichtung so geformt, dass sie eine Randbiegung aufweisen, die in Form oder Maß über den Betrag der Endrandbiegung hinausgeht.

Die Scheibe wird bevorzugt über die Ansaugvorrichtung mit einer lokal unterschiedlichen Randendbiegung gebogen. Der Ausdruck "lokale Randendbiegung" bezieht sich auf eine prozentual ungleichmäßige (Randend-)Biegung der gesamten Scheibe.

Die Scheibe wird bevorzugt in der Ansaugvorrichtung lokal über einen Luftstrom oder einen unteren Biegering gebogen. Der Ausdruck "lokal" meint einzelne Bereiche der Scheibe, in denen über einen Luftstrom, bevorzugt aus einer Düse, eine zusätzliche Biegung eingestellt wird. Alternativ kann die beschriebene lokale Biegung auch über einen von unten angelegten Biegering erfolgen. Damit lassen sich auch komplexe Geometrien erzeugen.

Die Scheibe wird bevorzugt über einen Temperaturgradienten auf der Glasoberfläche mit maximal 0,05 K/mm bis 0,5 K/mm, bevorzugt 0,1 K/mm bis 0,2 K/mm erwärmt. Die Einstellung des Temperaturgradienten erfolgt bevorzugt über unterschiedlich gesteuerte (d.h. unterschiedliche abgestrahlte Wärmemengen) und über oder unter den Scheiben platzierte Heizvorrichtungen.

Es werden bevorzugt zwei Scheiben wie oben beschrieben gebogen. Das erfindungsgemäße Verfahren und die weiter unten beschriebene erfindungsgemäße Vorrichtung eignen sich bevorzugt zum paarweisen Biegen von Scheiben.

Die Erfindung umfasst des Weiteren eine mit dem erfindungsgemäßen Verfahren gebogene Scheibe, insbesondere ein Scheibenpaar.

Die Erfindung umfasst des Weiteren einen Ofen zur Biegung von Scheiben, bevorzugt zum paarweisen Biegen von Scheiben. Der Ofen umfasst mindestens eine im Ofen angebrachte Heizvorrichtung und einen innerhalb und außerhalb des Ofens fahrbaren Biegeringhalter mit einem Biegering als Vorbiegering und/oder Endbiegering. Der Biegering ist bevorzugt sowohl als Vorbiegering als auch Endbiegering einstellbar oder umstellbar. Der Vorbiegering und der Endbiegering lassen sich beispielsweise durch das Entfernen eines Stiftes oder einer Halterung vom Vorbiegering in den Endbiegering umstellen. Der Ausdruck "umstellen" umfasst im Sinne der Erfindung sowohl die Änderung der Form (Geometrie) des Biegerings vom Vorbiegering zum Endbiegering als auch ein Abstreifen des Vorbiegerings sowie "Freiwerden" eines unter dem Vorbiegering angeordneten Endbiegrings. Innerhalb eines Vorwärmbereiches werden die Scheiben (erste Scheibe und/oder die zweite Scheibe) auf Erweichungstemperatur erwärmt. Dem Vorwärmbereich schließt sich eine erste, vertikal verstellbare, bevorzugt konvex gebogene Ansaugvorrichtung im Biegebereich an. Die Ansaugvorrichtung ermöglicht eine Aufnahme der Scheiben aus dem Vorbiegering, ein Biegen der Scheibe und Rückplatzieren der vorgebogenen Scheibe auf dem Endbiegering. Die Ansaugvorrichtung umfasst mindestens ein Gegenskelett mit einer gebogenen Kontaktfläche. Die Biegung der Kontaktfläche ist bevorzugt größer als die Biegung des Vorbiegerings, bevorzugt beträgt die Biegung der Kontaktfläche mindestens 30 %, besonders bevorzugt mindestens 90 %. Das Gegenskelett ist von einer Abdeckung mit Luftleitblech umgeben und die Kontaktfläche weist einen minimalen Abstand von 3 mm bis 50 mm zu dem Luftleitblech auf. Das Luftleitblech überragt den tiefsten Punkt der gebogenen Kontaktfläche in Richtung des Bodens. An die Ansaugvorrichtung schließt sich ein Zwischenbereich zum Heizen oder Tempern der auf dem fahrbaren Biegering befindlichen Scheiben an. Dem Zwischenbereich schließt sich ein Kühlbereich an. Der Kühlbereich bildet den abschließenden Teil des erfindungsgemäßen Ofens. Der Vorwärmbereich, Biegebereich, Heizbereich und der Kühlbereich sind verbunden nacheinander angeordnet und weisen in Verfahrensrichtung Heizvorrichtungen zum Beheizen der Bereiche auf. Die Heizvorrichtungen können sowohl oberhalb, neben als auch unterhalb des fahrbaren Biegeringhalters angebracht sein.

Der fahrbare Biegeringhalter wird bevorzugt über eine innerhalb und außerhalb des Ofens befindliche Transportvorrichtung bewegt.

Die Heizvorrichtung umfasst bevorzugt Heizstrahler, besonders bevorzugt Infrarotstrahler.

Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben realisieren. Die unterschiedlichen Temperaturbereiche ermöglichen eine graduelle Erwärmung der Scheibenoberfläche.

Die Erfindung umfasst des Weiteren die Verwendung des erfindungsgemäßen Ofens zur Biegung von zu laminierenden Scheiben, bevorzugt Fahrzeugwindschutzscheiben.

Im Folgenden wird die Erfindung anhand von Zeichnungen und eines Ausführungs- sowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt des Biegeprozesses des erfindungsgemäßen Ofens,
Figur 2 einen Querschnitt der Ansaugvorrichtung,
Figur 3 einen vergrößerten Ausschnitt der Ansaugvorrichtung und
Figur 4 ein Fließschema des erfindungsgemäßen Verfahrens.

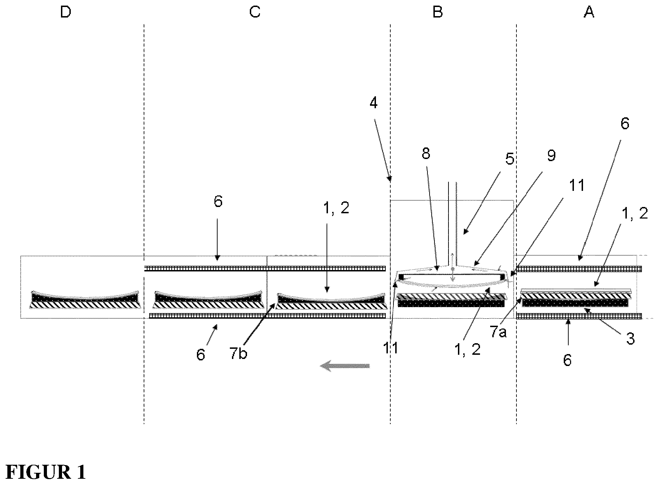

Figur 1 zeigt einen Querschnitt des Biegeprozesses des erfindungsgemäßen Ofens (4). Der Ofen (4) umfasst mindestens eine innerhalb des Ofens (4) angebrachte Heizvorrichtung (6) und einen innerhalb und außerhalb des Ofens fahrbaren Biegering (3) mit einem Vorbiegering (7a). Innerhalb eines Vorwärmbereiches (A) werden die Scheiben (1, 2) auf Erweichungstemperatur des jeweiligen Glases erwärmt und vorgebogen. Dem Vorwärmbereich (A) schließt sich im Hauptbiegebereich (B) eine erste, vertikal verstellbare, bevorzugt konvex gebogene Ansaugvorrichtung (5) an. Die Ansaugvorrichtung (5) ermöglicht eine Aufnahme der Scheiben (1, 2) aus dem Vorbiegering (7a), ein Biegen der Scheiben (1, 2) sowie anschließend ein Ablegen der gebogenen Scheiben (1, 2) auf dem Endbiegering (7b). Alternativ ist auch ein Ablegen der gebogenen Scheiben auf dem Vorbiegering möglich. Auf diese Art und Weise lässt sich der ursprünglich reine Schwerkraftbiegeprozess deutlich beschleunigen. Der grundsätzliche Aufbau der Ansaugvorrichtung (5) ist auch in US 2008/0134722 A1 beschrieben. An die Ansaugvorrichtung (5) schließt sich ein Zwischenbereich zum Tempern (C) und anschließend ein Bereich zum Abkühlen (D) der auf dem Endbiegering (7b) befindlichen Scheiben (1, 2) an.

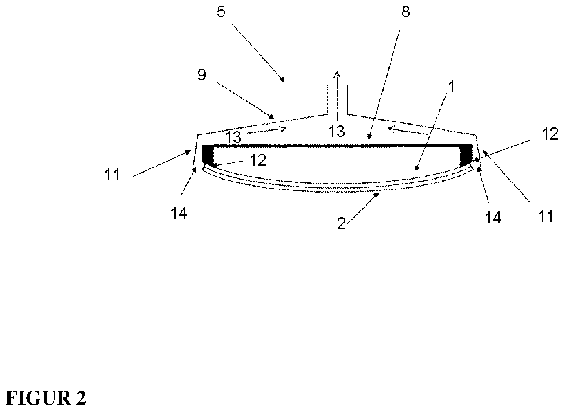

Figur 2 zeigt einen Querschnitt der Ansaugvorrichtung (5). Die Ansaugvorrichtung (5) enthält ein Gegenskelett (8) und eine das Gegenskelett (8) umgebende Abdeckung (9). Das Gegenskelett (8) kann im Bezug auf den nicht gezeigten Endbiegering (7b) global oder lokal überbogen sein. Das Gegenskelett wirkt auch als "Negativ" zum Endbiegering (7b). Über die Randzone (14) zwischen Gegenskelett (8) und Abdeckung (9) wird ein Luftstrom (13) in die Ansaugvorrichtung (5) angesaugt. Mit Hilfe des daraus resultierenden Unterdrucks werden die Scheiben (1, 2) angesaugt, angehoben und gebogen. Die Kontaktfläche (12) des Gegenskeletts (8) mit der zweiten Scheibe (2) ist bevorzugt mit einem flexiblen oder weichen Material wie feuerfesten Fasern aus Glas, Metall oder Keramik ausgekleidet.

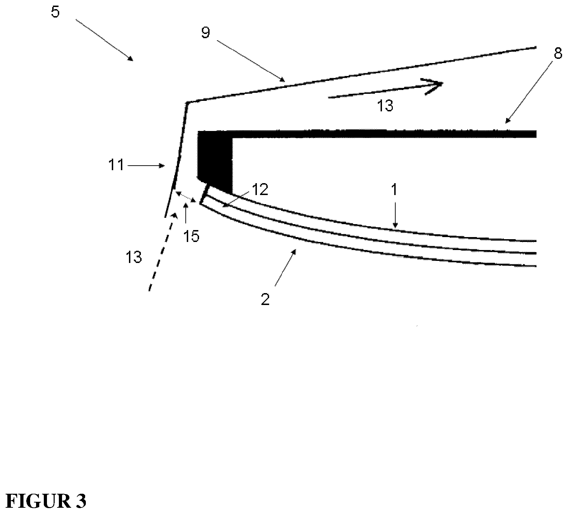

Figur 3 zeigt einen vergrößerten Ausschnitt der Ansaugvorrichtung (5). Die Ansaugvorrichtung (5) umfasst ein Gegenskelett (8) mit einer gebogenen Kontaktfläche (12). Die Biegung der Kontaktfläche (12) ist bevorzugt größer als die Biegung des in Figur 3 nicht gezeigten Vorbiegerings (7a). Das Gegenskelett (8) ist von einer Abdeckung (9) mit Luftleitblech (11) umgeben und die Kontaktfläche (12) des Gegenskeletts (8) weist einen Abstand (15) von 2 mm bis 50 mm zu dem Luftleitblech (11) auf. Die Scheiben (1, 2) weisen daher nach der Biegung über die Ansaugvorrichtung eine höhere Randendbiegung, bevorzugt eine mindestens 30 % größere Randendbiegung auf als nach dem Vorbiegering (7a). Die Scheiben (1, 2) weisen einen Abstand (15) von 5 mm bis 50 mm zu dem Luftleitblech (11) auf.

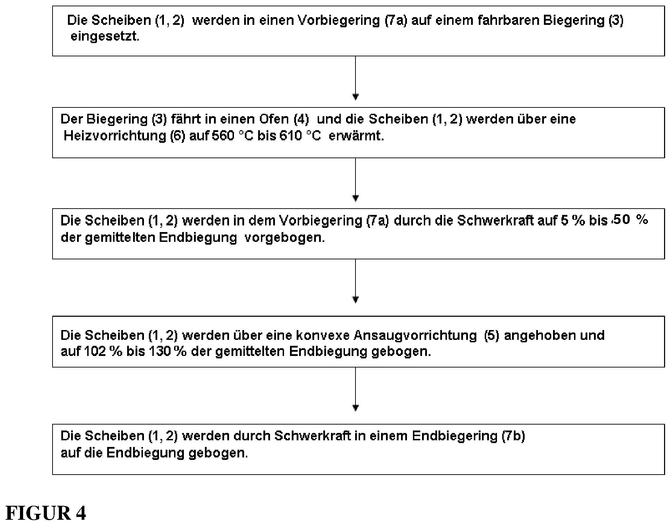

Figur 4 zeigt ein Fließschema des erfindungsgemäßen Verfahrens. Es werden zwei Scheiben (1, 2) in einen Vorbiegering (7a) auf einen fahrbaren Biegering (3) eingesetzt. Der Biegering (3) wird anschließend in einen Ofen gefahren. Die Scheiben (1, 2) werden über eine Heizvorrichtung (6) aus Strahlungsheizkörpern auf die Erweichungstemperatur der Scheiben (1, 2), etwa 560 °C bis 650 °C erwärmt. Im Zuge der Erwärmung der Scheiben (1, 2) werden die im Vorbiegering (7a) befindlichen Scheiben (1, 2) mithilfe der Schwerkraft auf 5 % bis 50 % der gemittelten, zu erreichenden Endbiegung vorgebogen. Die Heizvorrichtung umfasst bevorzugt eine Anordnung aus einzelnen separat steuerbaren Heizkacheln. Durch die unterschiedliche Wärmeabstrahlung der Kacheln lassen sich unterschiedliche Temperaturbereiche auf den Scheiben (1, 2) realisieren. Die unterschiedlichen Temperaturbereiche ermöglichen eine graduelle Erwärmung der Scheibenoberfläche. Die Scheiben (1, 2) werden anschließend über eine bevorzugt konvexe Ansaugvorrichtung (5) angehoben und auf 102 % bis 130 % der gemittelten Endbiegung gebogen. In einem nächsten Schritt werden die Scheiben (1, 2) über die konvexe Ansaugvorrichtung (5) auf dem Endbiegering (7b) auf dem fahrbaren Biegering (3) abgelegt. Der Vorbiegering (7a) und der Endbiegering (7b) sind jeweils entsprechend der beabsichtigten Scheibengeometrie gebogen. Der Vorbiegering (7a) und der Endbiegering (7b) sind bevorzugt auf dem gleichen fahrbaren Biegering (3) angeordnet und lassen sich durch das Entfernen eines Stiftes vom Vorbiegering (7a) in den Endbiegering (7b) umwandeln. Die Scheiben (1, 2) werden anschließend durch die Schwerkraft entsprechend der Form des Biegerings (5) auf die gemittelte Endbiegung gebogen. Die Scheiben (1, 2) werden anschließend abgekühlt.

### Bezugszeichenliste

- (1): erste Scheibe
- (2): zweite Scheibe
- (3): fahrbarer Biegeringhalter
- (4): Ofen
- (5): Ansaugvorrichtung
- (6): Heizvorrichtung
- (7a): Vorbiegering
- (7b): Endbiegering
- (8): Gegenskelett
- (9): Abdeckung
- (10): Transportvorrichtung
- (11): Luftleitblech
- (12): Kontaktfläche
- (13): Luftstrom
- (14): Randzone
- (15): Abstand der Kontaktfläche (12) vom Luftleitblech (11)
- (A): Vorwärmbereich
- (B): Hauptbiegebereich
- (C): Temperbereich
- (D): Kühlbereich

## Patentansprüche

1. Verfahren zum Biegen einer Scheibe, wobei
a. mindestens eine Scheibe (1, 2) in einen Vorbiegering (7a) mit einem fahrbaren Biegeringhalter (3) eingesetzt wird, die Scheibe (1, 2) mindestens auf etwa Erweichungstemperatur erwärmt wird, und die Scheibe (1, 2) im Vorbiegering (7a) auf 5 % bis 50 % der Randendbiegung vorgebogen wird,
b. die vorgebogenne Scheibe (1, 2) mittels einer Ansaugvorrichtung (5) aus dem Vorbiegering (7a) angehoben wird und über die im Vorbiegering (7a) erhaltene Biegung weiter gebogen wird, wobei während der Biegung an einer gebogenen Kontaktfläche (12) eines Gegenskeletts (8) der Ansaugvorrichtung (5) ein minimaler Abstand (15) von 3 mm bis 50 mm zwischen der Scheibe (1) und einem Luftleitblech (11) einer Abdeckung (9) der Ansaugvorrichtung (5) vorliegt, die das Gegenskelett (8) umgibt,
c. die Scheibe (1) mittels der Ansaugvorrichtung (5) in einen Endbiegering (7b) auf dem fahrbaren Biegeringhalter (3) abgelegt wird und die Scheibe (1, 2) auf die Endbiegung gebogen wird und
d. die Scheibe (1, 2) in dem Endbiegering (7b) abgekühlt wird und die Scheibe (1) über die Ansaugvorrichtung (5) auf 102 % bis 130 % der Randendbiegung gebogen wird.

2. Verfahren nach Anspruch 1, wobei die Scheibe (1) über die Ansaugvorrichtung (5) auf 105 % bis 120 % der globalen Randendbiegung gebogen wird.

3. Verfahren nach Anspruch 1 oder 2, wobei die Scheibe (1) über die Ansaugvorrichtung (5) mit einer lokal unterschiedlichen Randendbiegung gebogen wird.

4. Verfahren nach Anspruch 3, wobei Scheibe (1) in der Ansaugvorrichtung (5) lokal über einen Luftstrom oder einen unteren Biegering gebogen wird.

5. Verfahren nach einem der Ansprüche 1 bis 4, wobei die Scheibe (1) über einen Temperaturgradienten auf der Glasoberfläche mit maximal 0,05 K/mm bis 0,5 K/mm, bevorzugt 0,1 K/mm bis 0,2 K/mm erwärmt wird.

6. Verfahren nach einem der Ansprüche 1 bis 5, wobei die Scheibe (1) auf eine Temperatur von 500 °C bis 750 °C, bevorzugt 580 °C bis 650 °C erwärmt wird.

7. Verfahren nach einem der Ansprüche 1 bis 6, wobei die Scheibe (1) durch die Schwerkraft im Vorbiegering (7a) auf 10 % bis 30 % der lokalen Randendbiegung vorgebogen wird.

8. Verfahren nach einem der Ansprüche 1 bis 7, wobei die Ansaugvorrichtung (5) einen Ansaugdruck von 1 kg/m² bis 100 kg/m² aufbaut.

9. Verfahren nach einem der Ansprüche 1 bis 8, wobei zwei Scheiben (1, 2) gebogen werden.

10. Ofen zur Biegung von Scheiben, mindestens umfassend:
a. einen Vorwärmbereich (A) zum Vorwärmen mindestens einer Scheibe (1, 2) auf einem Vorbiegering (7a) auf einem fahrbaren Biegeringhalter (3),
b. einen Biegebereich (B) mit einer vertikal verstellbaren, gebogenen Ansaugvorrichtung (5), mindestens umfassend ein Gegenskelett (8) mit einer gebogenen Kontaktfläche (12) sowie eine das Gegenskelett (8) umgebende Abdeckung (9) mit Luftleitblech (11) zum weiteren Biegen der vorgebogenen Scheibe (1, 2),
c. einen Heizbereich (C) zum Endbiegen der Scheibe (1, 2) auf dem Endbiegering (7b) auf dem fahrbaren Biegeringhalter (3) und
d. einen Kühlbereich (D) zum Abkühlen der gebogenen Scheibe (1, 2) auf dem Endbiegering (7b).

11. Ofen nach Anspruch 10, der Heizvorrichtungen (6) zum Beheizen der Bereiche (A), (B), (C), (D) aufweist.

12. Ofen nach Anspruch 11, wobei die Heizvorrichtung (6) Heizstrahler, bevorzugt Infrarotstrahler umfasst.

13. Ofen nach Anspruch 11 oder 12, wobei die Heizvorrichtung (6) eine Anordnung aus einzelnen separat steuerbaren Heizkacheln oder Heizfelder umfasst.

14. Verwendung eines Ofens nach einem der Ansprüche 10 bis 13 zur Biegung von zu laminierenden Scheiben, bevorzugt Fahrzeugwindschutzscheiben.

## Claims

1. Method for bending a pane, wherein
a. at least one pane (1, 2) is placed in a pre-bending ring (7a) with a movable bending ring holder (3), the pane (1, 2) is heated at least to roughly its softening temperature, and the pane (1, 2) is pre-bent in the pre-bending ring (7a) to 5 % to 50 % of the final bend of the edge,
b. the pre-bent pane (1, 2) is lifted out of the pre-bending ring (7a) by a suction device (5) and is further bent beyond the bending obtained in the pre-bending ring (7a), wherein during the bending on a bent contact surface (12) of a counter framework (8) of the suction device (5), there is a minimum distance (15) of 3 mm to 50 mm between the pane (1) and an air baffle (11) of a cover (9) of the suction device (5) that surrounds the counter framework (8),
c. the pane (1) is placed by means of the suction device (5) in a final bending ring (7b) on the movable bending ring holder (3), and the pane (1, 2) is bent to the final bend, and
d. the pane (1, 2) is cooled in the final bending ring (7b) and the pane (1) is bent by the suction device (5) to 102 % to 130 % of the final bend of the edge.

2. Method according to claim 1, wherein the pane (1) is bent by the suction device (5) to 105 % to 120 % of the overall final bend of the edge.

3. Method according to claim 1 or 2, wherein the pane (1) is bent by the suction device (5) with a locally different final bend of the edge.

4. Method according to claim 3, wherein the pane (1) is bent locally in the suction device (5) by a stream of air or a lower bending ring.

5. Method according to one of claims 1 through 4, wherein the pane (1) is heated by a temperature gradient on the glass surface with a maximum of 0.05 K/mm to 0.5 K/mm, preferably 0.1 K/mm to 0.2 K/mm.

6. Method according to one of claims 1 through 5, wherein the pane (1) is heated to a temperature of 500 °C to 750 °C, preferably 580 °C to 650 °C.

7. Method according to one of claims 1 through 6, wherein the pane (1) is pre-bent by gravity in the pre-bending ring (7a) to 10 % to 30 % of the local final bend of the edge.

8. Method according to one of claims 1 through 7, wherein the suction device (5) builds a suction pressure of 1 kg/m² to 100 kg/m².

9. Method according to one of claims 1 through 8, wherein two panes (1, 2) are bent.

10. Furnace for bending panes, comprising at least:
a. a preheating region (A) for preheating at least one pane (1, 2) on a pre-bending ring (7a) on a movable bending ring holder (3),
b. a bending region (B) with a vertically displaceable, bent suction device (5), comprising at least a counter framework (8) with a bent contact surface (12) as well as a cover (9) surrounding the counter framework (8) with air baffle (11) for the further bending of the pre-bent pane (1, 2),
c. a heating region (C) for the final bending of the pane (1, 2) on the final bending ring (7b) on the movable bending ring holder (3), and
d. a cooling region (D) for cooling the bent pane (1, 2) on the final bending ring (7b).

11. Furnace according to claim 10, which has heating devices (6) for heating the regions (A), (B), (C), (D).

12. Furnace according to claim 11, wherein the heating device (6) includes radiant heaters, preferably infrared radiators.

13. Furnace according to claim 11 or 12, wherein the heating device (6) includes an arrangement made up of individual separately controllable heating tiles or heating fields.

14. Use of a furnace according to one of claims 10 through 13 for bending panes to be laminated, preferably motor vehicle windshields.

## Revendications

1. Procédé de cintrage d'une vitre, où
a. au moins une vitre (1, 2) est insérée dans un anneau de pré-flexion (7a) mobile, la vitre (1, 2) est chauffée à environ la température de ramollissement au moins et la vitre (1, 2) est pré-cintrée à entre 5% et 50% du cintrage de bord final,
b. la vitre pré-cintrée (1, 2) est enlevée au moyen d'un dispositif d'aspiration (5) de l'anneau de pré-flexion (7 a) et est cintrée davantage par le cintrage obtenu lors du pré-cintrage dans l'anneau de pré-flexion (7a), où pendant le cintrage sur une surface de contact (12) en courbe d'un contre-squelette (8) du dispositif d'aspiration (5) une distance minimale (15) de 3 mm à 50 mm existe entre la vitre (1) et un déflecteur d'air (11) d'une couverture (9) du dispositif d'aspiration (5), qui entoure le contre-squelette (8),
c. la vitre (1) est déposée au moyen du dispositif d'aspiration (5) dans un anneau de flexion finale (7b) sur le support d'anneau de flexion mobile (3) et la vitre (1, 2) est cintrée au cintrage final et
d. la vitre (1, 2) est refroidie dans l'anneau de flexion finale (7b) et la vitre (1) sur la Dispositif d'aspiration (5) est cintrée sur 102% à 130% du cintrage de bord final.

2. Procédé selon la revendication 1, où la vitre (1) est cintrée sur le dispositif d'aspiration (5) à entre 105 % et 120 % du cintrage de bord final.

3. Procédé selon la revendication 1 ou 2, où la vitre (1) est cintrée au moyen du dispositif d'aspiration (5) avec un cintrage de bord final localement différent.

4. Procédé selon la revendication 3, où la vitre (1) est cintrée localement dans le dispositif d'aspiration (5) par un flux d'air ou un anneau de flexion inférieure.

5. Procédé selon l'une des revendications 1 à 4, où la vitre (1) est réchauffée à l'aide d'un gradient de température à la surface de verre de 0,05 K/mm à 0,5 K/mm maximal, de préférence de 0,1 K/mm à 0,2 K/mm.

6. Procédé selon l'une des revendications 1 à 5, où la vitre (1) est chauffée à une température de 500 °C à 750 °C, de préférence de 580 °C à 650 °C.

7. Procédé selon l'une des revendications 1 à 6, où la vitre (1) est pré-cintrée par la gravité dans l'anneau de pré-cintrage (7a) de 10% à 30% du cintrage de bord final local.

8. Procédés selon l'une des revendications 1 à 7, où le dispositif d'aspiration (5) établit une pression d'entrée de 1 kg/m² à 100 kg/m².

9. Procédé selon l'une des revendications 1 à 8, où deux vitres (1, 2) sont cintrées.

10. Four destinée au cintrage des vitres comprenant, au moins:
a. une zone de préchauffe (A), pour préchauffée au moins une vitre (1, 2) sur un anneau de pré-flexion (7a) sur un support d'anneau de flexion (3) mobile,
b. une zone de flexion (B) avec un dispositif d'aspiration (5) verticalement réglable et courbé, comprenant au moins un contre-squelette (8) avec une surface de contact (12) courbée, ainsi qu'un couvercle (9) qui entoure le contre-squelette (8) avec un déflecteur d'air (11) pour cintrer davantage la vitre pré-cintrée (1, 2),
c. une zone de chauffe (C) pour le cintrage de bord final de la vitre (1, 2) sur l'anneau de flexion finale (7b) sur le support d'anneau de flexion mobile (3) et
d. une zone de refroidissement (D) pour refroidir la vitre courbée (1, 2) sur l'anneau de flexion finale (7b).

11. Four selon la revendication 10, qui présente des dispositifs de chauffage (6) pour chauffer les zones de (A), (B), (C), (D).

12. Four selon la revendication, où le dispositif de chauffage comprend un chauffage à rayonnement, de préférence un chauffage à rayonnement infrarouge.

13. Four selon l'une des revendications 11 ou 12, où l'appareil de chauffage (6) comprend un arrangement carreaux ou de panneaux chauffants individuels, réglables séparément.

14. Utilisation d'un four selon l'une des revendications 10 à 13 pour le cintrage de vitres à laminer, de préférence des pare-brises de véhicule.
